# EUROPEAN PATENT APPLICATION

(11) **EP 1 818 129 A1**
(43) Date of publication of application: **15.08.2007**
(21) Application number: 06425081.4
(22) Date of filing: 13.02.2006
(51) Int. Cl.: B23K 26/08, B23K 26/28

(54) **System and process for welding metal tubes**

(71) Applicant: VOESTALPINE EUROWELD S.R.L, 10156 Torino (IT)
(72) Inventor: Recchia, Giuseppe, 80100 Napoli (IT)
(74) Representative: Petruzziello, Aldo

(57) **Abstract**

A system (100) and a process for welding metal tubes and a metal tube welded with said system and process are described. The system (100) comprises a laser assembly (1) and a tube supporting assembly (3). The tube supporting assembly (3) comprises a pair of opposed mandrels (31, 31') adapted to clamp and to set in rotation two tubes (4, 4') to be welded with abutting ends (40, 40'). The laser assembly (1) comprises a nozzle (17) for delivery of a laser beam, which is focused on the abutting ends (40, 40') of the tubes to perform a radial laser weld during rotation of the tubes.

## Description

The present invention refers to a system and a process for welding metal tubes and to a welded metal tube made thereby.

Some items of daily use are made by means of a metal structure obtained through the use of tubes which are shaped according to the overall design to be obtained. Some examples can be found in the automotive field, such as seat frames or some reinforcements (called intrusion protection bars) which are inserted into car doors and must ensure opening thereof even after a lateral impact, or the chassis of motorbikes and scooters. The dimensioning of these structures is determined by means of calculation systems and crash tests.

In order to be able to form the structure, the tubes are connected to each other by means of a welding process with filler material (with an electrical resistance electrode or with CO₂ braze welding). However, this welding process involves various drawbacks, such as:
- the high unit cost of the operation,
- an excessively long cycle time,
- a considerable visual effect due to the presence of a welding ridge,
- failure or difficulty in achieving a seal weld because of micro- or macro-porosities in the weld, and
- weakening of the mechanical characteristics (or excessive fragility, depending upon the type of material used) because of the excessive heat applied, which changes the structure of the steel in the large area affected by the weld.

Consequently, the realization of these structures is tied to various technical problems related to joining of the tubes, such as weight, the industrial application (electrical resistance welding, CO₂ welding etc), the availability on the market, the possibility of reinforcing the structure in the area of greatest stress, and others still.

It must be considered that for realization of the above mentioned structures, the market requires a product with the following characteristics:
■ light, but also strong in the areas of greatest stress;
■ applicable to the finished component through a simple, repetitive process qualitatively complying with the required technical standards;
■ readily available on the market, without being subject to commercial requirements of special production; and
■ does not require additional reinforcing supports to be produced, reducing production time and costs, without penalizing quality and safety.

To fulfil these requirements at least in part, so-called tailored tubes have recently been developed. Tailored tubes are obtained from tailored blanks (flat lengths of sheet steel of different gauges and mechanical strengths from each other, joined edge-to-edge by laser welding without metal filler). The tailored multi-gauge blank undergoes cold rolling and is subsequently joined together by longitudinal laser welding to obtain the tailored tube.

However, tailored tubes also present some drawbacks. In fact tailored tubes are limited to a minimum radius of curvature, with the result that tailored tubes with a diameter of less than 50 mm cannot be obtained. Furthermore, their production process is too long and costly, since it is composed of numerous production stages (cutting of the single lengths, flat linear welding, cold-rolling of the semi-finished product and longitudinal laser welding).

On the other hand, it must be considered that tubes for normal use in the fields previously described, have diameters typically ranging from 20 to 30 mm. Thus tailored tubes have found application only in the field of hydroforming of structural support and large-sized bars, defeating their use in low-segment, high-usage market sectors, also given the high market price.

The object of the present invention is to overcome the drawbacks of the prior art, providing a welding process for metal tubes that is practical, rapid, cheap and simple to accomplish.

Another object of the present invention is to produce such a welded metal tube that is versatile, light, strong and easy to handle.

These objects are achieved in accordance with the invention with the characteristics listed in appended independent claims 1 and 15.

A possible solution to market demands is represent by the use of low-cost commercial tubes, produced by a vast number of steel companies. A number of lengths of tube are joined together by means of radial laser welding of the touching end edges.

This technology can make it possible to join tubes of the same outside diameter but of different gauge and material. For example, a traditional steel tube with one of high alloy steel (special high-strength steel) in the normally available diameters, with a very short processing cycle time.

The tube according to the invention presents various advantages:
■ it is light, in that it is not always necessary to have a constant gauge over the whole length of the tube. In fact the gauge can be high only in the areas of greatest stress, like the central area or the peripheral areas, that is in the areas of greatest bending or in the joining and supporting end points;
■ it also allows the concept of maximum stiffness, in some points, to be combined with yield in others points, where it is necessary to aid dissipation of kinetic or potential energy, that is in the case of crashes or accidental combined bending and compressive stresses, ensuring the safety of the users of the end product (automobiles, bicycles, heating radiators, etc.);
■ it allows the component to be assembled on the finished product through a simple, fast, and repetitive process that qualitatively fulfils the required technical specifications;
■ it allows production costs to be drastically reduced;
■ it makes it possible not to have to design, produce, store and manage further reinforcing elements, reducing time and production and maintenance costs for specific equipment, without affecting the quality and safety of the end product;
■ it allows better geometric coupling to be achieved in that the fewer the parts there are to be assembled, the greater the precision. This also allows closer control of the tolerance chain; and
■ it makes it possible to minimize the risk of corrosion, due to the drastic reduction in welding points between the component parts, that is, fewer galvanic bridges.

Further characteristics of the invention will be made clearer by the detailed description that follows, referring to a purely exemplifying and therefore non-limiting embodiment thereof, illustrated in the appended drawings, in which:
Fig. 1 is a front view illustrating diagramatically the welding system according to the invention;
Fig. 2 is a side view of the system of Fig. 1, taken along the plane of section II-II of Fig. 1;
Fig. 3 is a perspective view illustrating a mandrel and the welding head of the system according to the invention;
Fig. 4 is a block diagram illustrating a possible embodiment of the optics of the laser welding system according to the invention;
Fig. 5 is a perspective view of a tube during the cutting operation for preparation for welding according to the invention;
Fig. 6 is an axial sectional view of the tube during cutting illustrated in Fig. 2;
Fig. 7 is a front view of the system illustrating the stage of placing the tubes end-to-end before welding;
Fig. 8 is a front view like Fig. 7, but illustrating the welding stage; and
Fig. 9 shows two graphs showing respectively the power of the laser and the speed of rotation of the mandrels, according to the angle of rotation of the tubes to be welded and the process time.

The welding system according to the invention, denoted as a whole with reference numeral 100, is described with the aid of the figures.

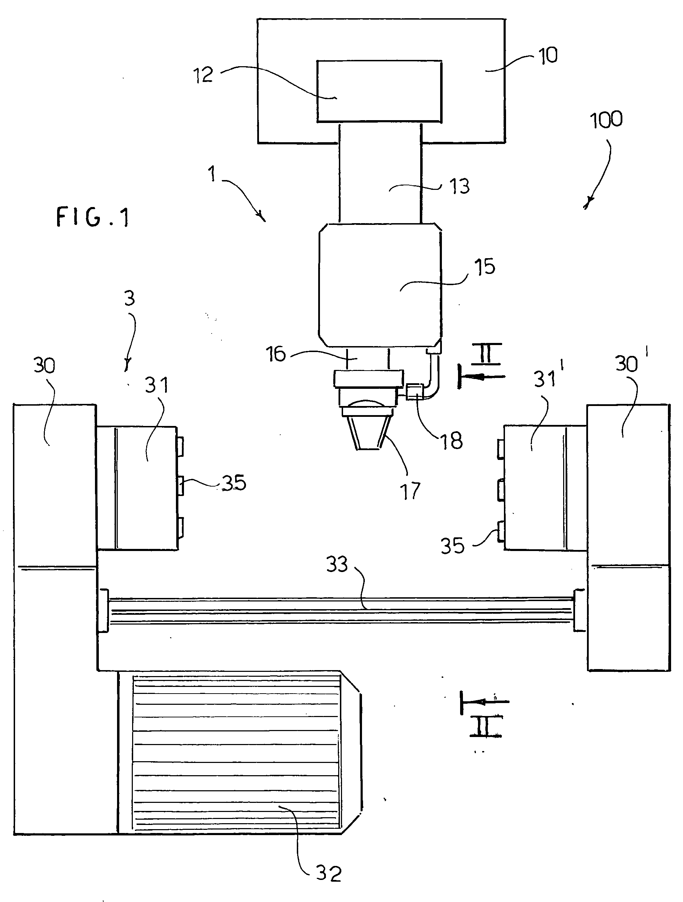

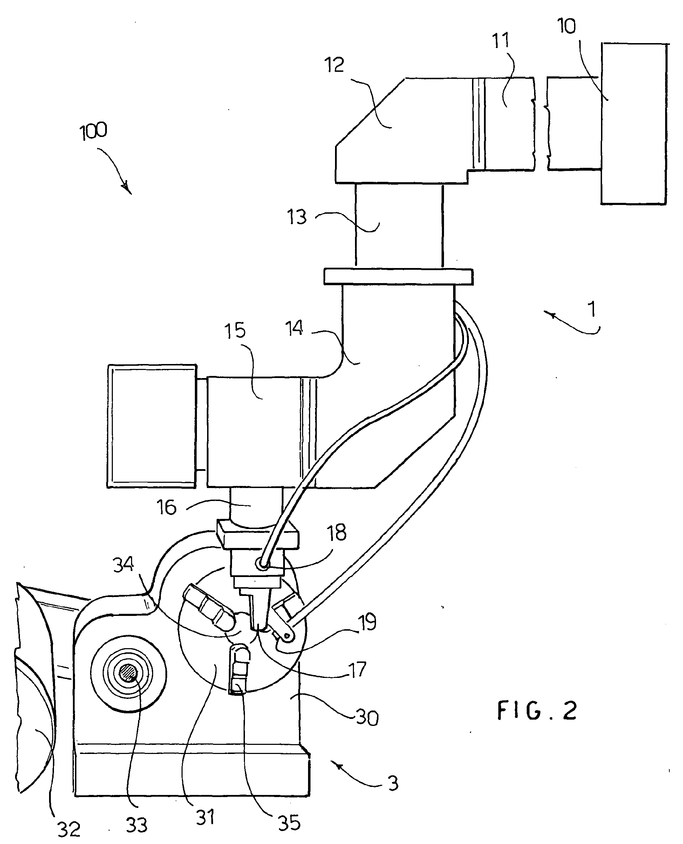

With reference for now to Figs. 1 and 2, the welding system 100 comprises a laser assembly 1 and a tube supporting assembly 3.

The laser assembly 1 comprises a laser generator 10 connected by means of a horizontal conduit 11 to a first optical assembly 12, which serves to deflect the laser beam towards a vertical conduit 13. The laser beam, through the vertical conduit 13, is conveyed towards a second optical assembly 14 which deflects the beam towards a third focussing optical assembly 15. The third focussing optical assembly 15 is connected by means of a vertical conduit 16 to a laser emitting head provided with a nozzle 17 adapted to emit a laser beam focussed in a substantially vertical direction.

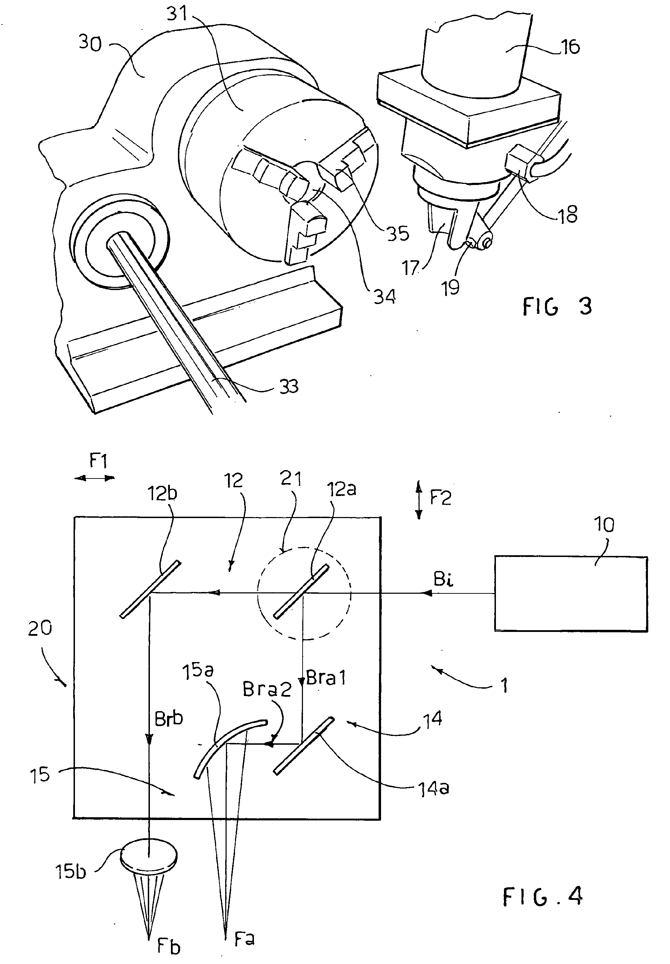

As shown better in Figure 3, an air inlet duct 18 is provided in the laser head before the nozzle 17, adapted to introduce air into the head and thus generate a cross jet which crosses the laser beam to block impurities and prevent them from entering the head and dirtying the optics of the laser assembly 1.

A gas delivery conduit 19 adapted to send gas in to the area of the workpiece undergoing the laser treatment is connected to the nozzle 17 by means of a bracket, in order to create a suitable atmosphere for the type of processing to be carried out.

The laser assembly 1 must be able to carry out the welding process on metal tubes. Therefore, the laser generator must be able to deliver a power of at least 4-6 KW. A CO₂ laser generator that is able to ensure such a power is preferably used.

In order to prepare the tubes for welding, a laser cut can preferably be made on the end edge of the tube. The same laser assembly 1 used for welding can be used for this purpose. However, for cutting the laser generator 10 must provide lower powers than those used for welding. For example, a power of about 2 KW is sufficient to ensure cutting of the tube.

In welding, because to the high powers involved, the optical focussing assembly 15 must use reflex optics based on a reflecting mirror which is suitably cooled. In cutting, on the other hand, in which the powers involved are lower, the optical focussing assembly 15 can use diffraction optics based on a lens though which the laser beam passes.

Fig. 4 shows a possible embodiment of the optics of the laser assembly 1, realized in such a manner that the laser assembly 1 can be used both for welding and for cutting. The entire optical assembly is mounted on a block 20 which can translate both horizontally in the direction of the arrows F1 and vertically in the direction of the arrows F2, operated by means of special actuators.

The first optical assembly 12 comprises two flat reflecting mirrors 12a e 12b for welding and for cutting, respectively. The two mirrors 12a e 12b are disposed one behind the other and inclined by about 45° with respect to the incident laser beam Bᵢ coming from the generator 10.

The first mirror 12a is integrated into a beam breaker 21 adapted to insert it and exclude it. When the first mirror 12a is inserted, the laser beam Bᵢ strikes it and is reflected, generating a reflected beam Bᵣₐ₁ directed towards the second optical assembly 14. When the first mirror 12a is excluded, the laser beam Bᵢ reaches the second mirror 12b.

The second optical assembly 14 is used only for welding and comprises a flat mirror 14a inclined by 45° with respect to the laser beam Bᵣₐ₁ which strikes it. As a result the mirror 14a generates a reflected beam Bᵣₐ₂ directed towards a paraboloid shaped mirror 15a forming part of the third focusing optical assembly 15. The paraboloid mirror 15a reflects the laser beam Bᵣₐ₂ that strikes it and focuses the beam into a point Fₐ which must coincide with the welding area.

When the incident beam Bi strikes the second flat mirror 12b of the first optical assembly 12 a reflected beam B_{rb} is generated which is directed directly at a lens 15b forming part of the focusing assembly 15. The beam B_{rb} passes through the lens 15b and is focused into a point Fb which must coincide with the cutting area.

Therefore, when cutting is to be carried out, the beam breaker 21 is operated to exclude the first mirror 12a and the block 20 is moved so that the focus F_{b} is situated in the cutting area. On the other hand, when welding is to be carried out, the beam breaker 21 is operated to insert the first mirror 12a and the block 20 is moved so that the focus Fₐ is situated in the welding area.

Returning to Figures 1, 2 and 3, the tube supporting assembly 3 comprises two fixed sides 30, 30' on which a pair of mandrels 31, 31' disposed opposite each other and perfectly coaxial is reversibly mounted.

On one side 30 there is mounted an electric motor 32 which drives a transmission, disposed inside the side 30, which sets in rotation the respective mandrel 31.

A synchronization bar 33 is disposed transversally between the two sides 30, 30'. The synchronization bar 33 has one end connected to the transmission of the first side 30 and the other end connected to a transmission of the second side 30' which sets in rotation the second mandrel 31'. In this manner the two mandrels 31, 31' are driven in rotation in perfect synchronism with each other.

Clearly various changes within the reach of a person skilled in the art can be made to this configuration illustrated in the figures. For example, various types of transmission, such as belt, chain or gear transmissions can be used. In place of a traditional motor 32 a torque motor which acts in direct drive on the mandrel 31 can be used. In place of the synchronization bar 33 other synchronization means such as belts or chains can be used, or two independent motors can be used mounted on the respective sides 30, 30' and synchronized by encoders or drives.

Each mandrel 31, 31' has an axial through hole 34 which passes through the respective side 30, 30'. The diameter of the hole 34 is slightly greater than the outside diameter of the tubes to be welded. In this manner the tubes to be welded can be fed laterally from the outside of the sides 30, 30' and thus the welded tube can be discharged laterally.

Jaws 35 which serve to grip the tube firmly act in each mandrel 31, 31'. By way of example, three jaws 35 disposed radially and spaced evenly at an angle of 120° are provided.

Each mandrel 31, 31' has a self-centring, independent jaw-closing system, so as to ensure that the two tubes to be welded are perfectly coaxial, even when they have a different outside diameter, due to the different tolerances of the various tube manufacturing companies.

The nozzle 17 of the laser assembly is disposed so as to send a perfectly radial laser beam with respect to the axis of the tubes retained by the mandrels 31, 31'.

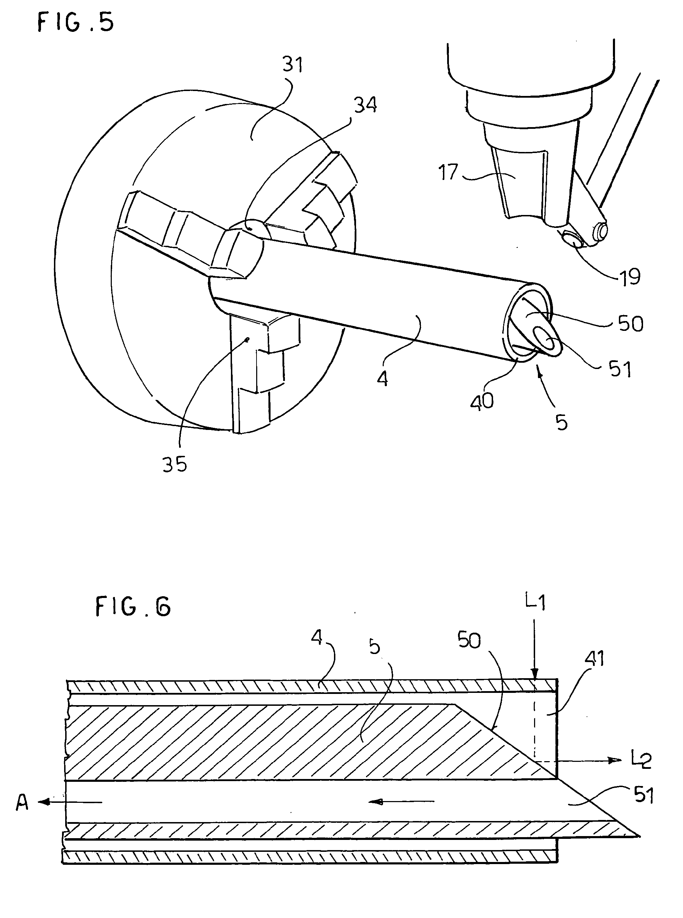

The welding process according to the invention is described hereunder with the aid of Figs. 5 - 9.

In Fig. 5, a tube 4 to be welded is illustrated, disposed in the hole 34 of the mandrel 31 and blocked in position by the jaws 35. The tube 4 can made of any type of ferrous material, such as steel or steel alloy. The tube 4 preferably has an outside diameter between 20 e 50 mm and a gauge between 1 and 3 mm.

The end edge 40 of the tube 4 which is to be welded must be perfectly smooth and flat and must not have any imperfections or rough parts, to ensure a continuous contact between the ends of the two tubes to be welded and thus the straightness of the new welded tube. Therefore, prior to the welding process, the tubes should be subjected to an end surface finishing process by means of an abrasive machine or the like.

In order to avoid this surface finishing process on the end of the tube, the tube 4 can be subjected to a laser cutting process with the laser assembly 1. In this manner an end portion of the tube will be cut radially, so as to leave a perfectly smooth, flat edge.

Radial laser cutting of the tubes, however, holds to two substantial drawbacks. The first drawback is represented by the fact that the laser beam can pass through the entire tube transversally, striking the two diametrically opposite portions of tube and resulting in an imperfect cut. The second drawback is represented by the fact that the debris generated by cutting falls onto the inner surface of the edge of the tube, forming imperfections of the edge.

With reference also to Fig. 6, in order to overcome the first drawback, a focusing element 5 adapted to defocus the laser beam L₁ which passes through the thickness of the tube 4 has been devised. This defocusing element 5 defocuses the radial beam L₁ into an axial beam L₂ which does not strike the thickness of the tube.

For this purpose the defocusing element 5 is a core which is inserted into the tube 4 to be cut and has a defocusing surface 50 of reflecting material. The defocusing surface can be a flat surface inclined about 45° with respect to the incident laser beam L₁, or a tapered conical or truncated conical surface.

In order to overcome the second drawback, a suction system to suck air into the tube 4 has been devised; in this manner the debris generated by the cut is sucked up. Clearly, if the defocusing element 5 is used, it must have a channel 51 connected to air suction means, so that the debris is conveyed into the channel 51 and sucked in the direction of the arrow A, keeping the inner surface of the tube 4 perfectly clean.

Following cutting, a ring-shaped scrap 41 which must be expelled from the system is formed. Therefore, the defocusing element 5 is made to retract so as to allow the scrap 41 to drop. The system 100 has suitable detection means adapted to detect automatically whether the scrap 41 has been removed or still remains attached to the tube 4. If the scrap 41 remains attached to the tube 4, the detection means order the machine to stop, to avoid carrying out welding on a tube which has been partially cut.

The detection means can be of any known type, such as proximity sensors and the like which control the initial length of the tube before cutting and the final length of the tube after cutting.

During cutting the motor 32 is operated so as to ensure a speed of rotation of the tube which raises a linear velocity between 100-200 mm/second and thus an angular velocity inversely proportional to the diameter of the tube.

The power of the laser generator 10 is fixed at about 2 KW. A catalyser such as an oxidizing gas, in particular oxygen O₂ is used to aid cutting. That is to say, oxygen is delivered to the cutting area from the gas delivery nozzle 19 of the laser emitting head. The oxygen exerts an oxidizing effect on the metal molecules of the tube which are struck by the laser beam, causing oxidization and therefore breaking thereof.

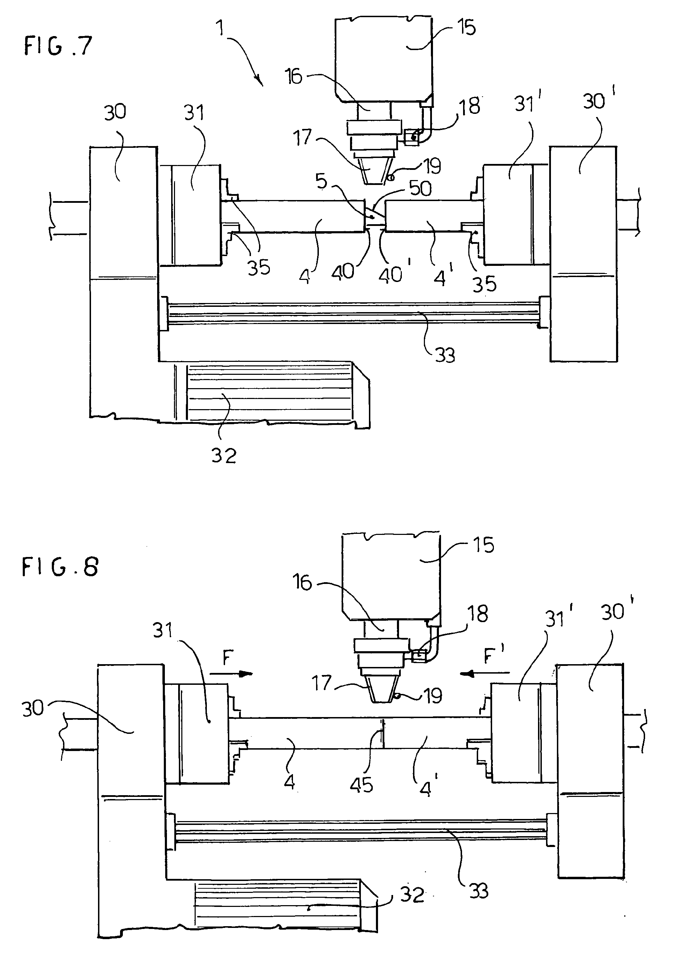

With reference to Fig. 7 two tubes 4, 4' are illustrated, fixed to respective mandrels 31, 31'. The tubes 4, 4' have undergone laser cutting of their ends 40, 40' which are ready to be welded. A defocusing element 5 is disposed between the tubes 4, 4' so that its defocusing surface 50 is level with the ends 40, 40' of the tubes.

Subsequently, with reference to Fig. 8, the mandrels 31, 31' are made to translate in the direction of the arrows F, F' to approach each other, until the ends 40, 40' of the tubes abut against each other. In this situation the two tubes 4, 4' are perfectly coaxial.

At this point the motor 32 is operated to set the mandrels 31, 31' in rotation and to make the tubes 4, 4' rotate at the same speed, which corresponds to a constant linear speed in the range of 80 - 150 mm/s; the corresponding angular speed is inversely proportional to the diameter of the tubes.

When a perfectly constant speed is reached, the laser generator 10 is operated with a constant power between 4 and 6 KW. In this manner a laser beam radial with respect to the axis of the tubes 4, 4' and perfectly collimated on the ends 40, 40' which are brought close to each other, leaves the nozzle 17. A radial laser weld 45 is then made on a 360°revolution.

The weld must be made in a controlled atmosphere, with an inert gas able to inhibit the oxidation process of the metal molecules of the tubes, with a temperature that ranges from 2.000 to 4.000°C. For this purpose an inert gas, such as helium, is delivered from the gas delivery nozzle 19 into the welding area.

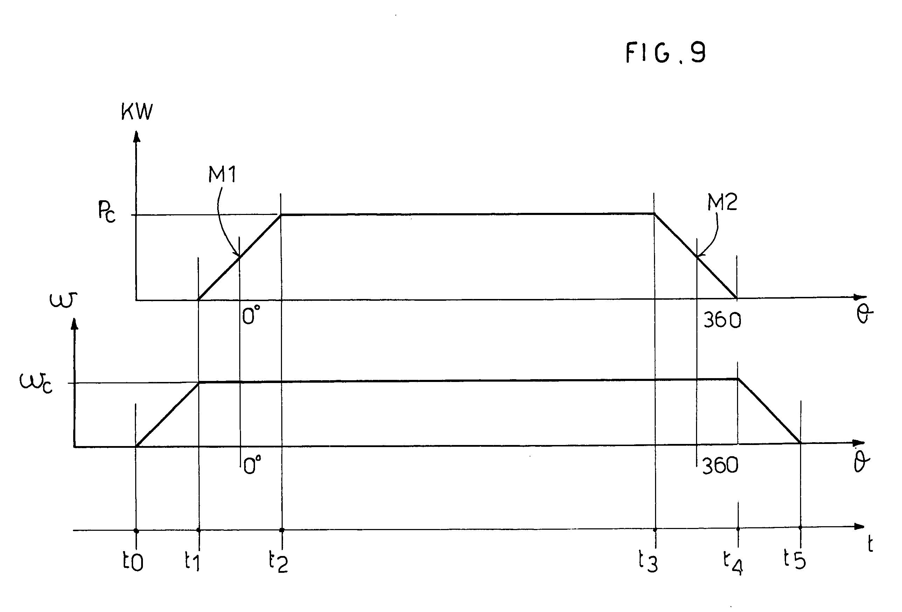

With reference to Fig. 9, the timing of the welding process according to the invention is described. At the initial time t₀ the motor 32 is operated to set the tubes in rotation. In the time interval t₁ - t₀ the motor 32 will follow an acceleration ramp to reach a constant running speed ω_{c}, set by the user.

After the time t₁ the laser generator 10 is operated. In the time interval t₂ - t₁ the laser beam striking the tubes to be welded will have an increasing power that goes from 0 to Pc, wherein Pc is a constant power value set by the user. At the time t₃ power is removed from the laser generator 10 and at the time t₄ the laser power reaches zero. At this point the motor 32 can be stopped, thus the welded tube undergoes a deceleration and stops at the time t5.

The process must be set up so that the tubes to be welded make a precise revolution with an angle θ from 0° to 360° which starts from the midpoint M1 of the laser power ramp-up and finishes at the midpoint M2 of the laser power ramp-down. In this manner the ramp-up and ramp-down laser powers overlap in the same area of the tube (at the start and at the end of welding) giving as a result exactly the pre-set constant power Pc. Thus the whole weld is carried out at a constant power PC, resulting in a perfectly even weld.

Without this arrangement, there would be an area of the tube (at the start and at the end of welding) with an uneven weld with respect to the remaining part of the tube since there would not be a constant welding power in this area. In fact, if welding were interrupted early, there would be an area with a too low welding power and if welding were interrupted late there would be an area with a too high welding power.

Numerous changes and modifications of detail within the reach of a person skilled in the art can be made to the present embodiment of the invention without thereby departing from the scope of the invention, as set forth in the appended claims.

## Claims

1. A system (100) for welding metal tubes comprising a laser assembly (1) and a tube supporting assembly (3), said tube supporting assembly (3) comprising a pair of opposed mandrels (31, 31') adapted to clamp and to set in rotation two tubes (4, 4') to be welded with their ends (40, 40') abutting against each other, said laser assembly (1) comprising a nozzle (17) for delivery of a laser beam which is focused on the abutting ends (40, 40') of the tubes to perform a radial laser weld during rotation of the tubes.

2. A system (100) according to claim 1, **characterized in that** said mandrels (31, 31') are disposed to as to keep the tubes (4, 4') perfectly coaxial.

3. A system (100) according to claim 2, **characterized in that** said mandrels (31, 31') comprise jaws (35) adapted to clamp the tubes (4, 4'), wherein the mandrel jaw operating mechanisms are self-centring and independent of each other, so as to ensure that the tubes are coaxial, even in the event of differences in the tolerances of the outside diameters.

4. A system (100) according to any one of the preceding claims, **characterized in that** said tube supporting assembly (3) comprises synchronization means (33) adapted to synchronize rotation of the two mandrels (31, 31') at the same speed.

5. A system (100) according to claim 4, **characterized in that** said tube supporting assembly (3) comprises a motor unit (32) connected by means of a transmission to one mandrel (31) and to said synchronization means (33), which in turn are connected by means of a transmission to the other mandrel (31').

6. A system (100) according to any one of the preceding claims, **characterized in that** said laser assembly (1) comprises a CO₂ laser generator (10) and optical deflection assemblies (12, 14) adapted to direct the laser beam towards an optical focusing assembly (15) adapted to focus the laser beam onto the surface to be welded.

7. A system (100) according to claim 6, **characterized in that** said laser assembly (1) is set to carry out a radial cutting of the end portion (41) of said tubes (4, 4') to be welded so as to obtain a perfectly smooth, flat end (40, 40'), wherein said focusing optics for welding comprises a reflecting paraboloid mirror (15a) and said focusing optics for cutting comprises a diffraction lens (15b), switching means (21) being provided to switch the laser beam from the generator (10) towards said reflecting mirror (15a) or towards said diffraction lens (15b) according to the process required.

8. A system (100) according to claim 7, **characterized in that** it comprises detection means able to detect removal of the scrap (41) following a radial laser cutting of the end of the tube.

9. A system (100) according to any one of the preceding claims, **characterized in that** said laser assembly (1) comprises an air inlet conduit (18) adapted to introduce a jet of air transversally to the laser beam to block the impurities deriving from laser processing of the tube.

10. A system (100) according to any one of the preceding claims, **characterized in that** said laser assembly (1) comprises a gas delivery nozzle (19) adapted to deliver gas into the area in which the laser beam strikes the tube to generate a suitable atmosphere for the process.

11. A system (100) according to any one of the preceding claims, **characterized in that** it comprises air suction means adapted to suck the air from the inside of the tube, during the laser processing process, to remove the debris created.

12. A system (100) according to any one of the preceding claims, **characterized in that** it comprises defocusing means (5) adapted to defocus the laser beam which passes through the thickness of the tube and to convey it out of the tube, preventing it from striking the inside surface of the tube.

13. A system (100) according to claims 11 and 12, **characterized in that** said defocusing means (5) comprise a core, which is inserted into the tube and has a hole (51) connected to said suction means.

14. A system (100) according to claim 12 or 13, **characterized in that** said defocusing means (5) comprise a core which is inserted into the tube and has a reflecting surface disposed along an inclined plane or tapered with respect to the radial laser beam that strikes it.

15. A tube welding process comprising the steps of:
- positioning the tubes with the ends (40, 40') abutting against each other,
- rotation of the tubes, and
- radial laser welding of the abutting ends of the tubes.

16. A process according to claim 15, **characterized in that** said tubes are disposed coaxially and are made to rotate at the same speed.

17. A process according to claims 15 or 16, **characterized in that** during welding the tubes with abutting ends are made to rotate at a constant speed ranging between 80 and 150 mm/sec.

18. A process according to any one of claims 15 to 17, **characterized in that** during welding the laser power is kept constant at a power value (Pc) ranging between 4 and 6 KW.

19. A process according to any one of claims 15 to 18, **characterized in that** during welding, the welding area is kept in an inert gas atmosphere.

20. A process according to any one of claims 15 to 19, **characterized in that** the ends (40, 40') of said tubes are processed, so as to be perfectly smooth and flat.

21. A process according to claim 20, **characterized in that** it comprises a step of radial laser cutting of an end portion (41) of the tube to obtain said smooth and flat ends (40, 40') of the tubes.

22. A process according to claim 21, **characterized in that** during radial laser cutting the tube is made to rotate at a constant speed ranged between 100 and 200 mm/sec.

23. A process according to claim 21 or 22, **characterized in that** during radial laser cutting the laser power is kept constant at a power value of about 2 KW.

24. A process according to any one of claims 21 to 23, **characterized in that** during laser cutting the cutting area is kept in an oxidizing gas atmosphere.

25. A process according to any one of claims 15 to 24, **characterized in that** it comprises a defocusing step designed to defocus the radial laser beam which passes through the thickness of the tube to direct it out of the tube without touching the inside walls of the tube.

26. A process according to any one of claims 15 to 25, **characterized in that** it comprises a step of sucking air into said tube during the laser processing process to remove the debris created by the laser processing process.

27. A metal tube **characterized in that** it comprises radial laser welding performed with the process according to any one of claims 15 to 26 and/or with the system according to any one of claims 1 to 14.
